# EUROPÄISCHE PATENTSCHRIFT

(11) **EP 0 413 099 B1**
(45) Veröffentlichungstag und Bekanntmachung des Hinweises auf die Patenterteilung: **10.03.1993**
(21) Anmeldenummer: 90110903.3
(22) Anmeldetag: 08.06.1990
(51) Int. Cl.: B62D 25/00, B60R 21/13, B60J 7/12

(54) **Bausatz für die Umrüstung einer Kraftfahrzeug-Limousine in ein Kabriolett**
Kit for transforming a saloon motor car into a cabriolet
Ensemble pour la transformation d'une automobile à conduite intérieure en cabriolet

(30) Priorität: 17.08.1989 DE 8909838 U
(43) Veröffentlichungstag der Anmeldung: 20.02.1991
(73) Patentinhaber: R & R KRAFTFAHRZEUG REPARATUR GMBH, 82216 Maisach (DE)
(72) Erfinder: Mooser, Stefan, D-8031 Maisach (DE); Pollner, Robert, D-8042 Oberschleissheim (DE); Maier, Robert, D-8031 Rottbach (DE); Böckly, Rene, D-6750 Kaiserslautern (DE); Schweitzer, Anton, D-6753 Enkenbach (DE)
(74) Vertreter: Zmyj, Erwin, Dipl.-Ing., Dipl.-Wirtsch.-Ing.

(56) Entgegenhaltungen:
- DE-A- 3 403 764
- DE-U- 8 810 287
- US-A- 4 171 141
- US-A- 4 261 615
- US-A- 4 595 230

## Beschreibung

Die Erfindung bezieht sich auf einen Bausatz für die Umrüstung einer Kraftfahrzeug-Limousine in ein Kabriolett, umfassend einen an der B-Säule anzubringenden Mittelbügel, Seitenverstärkungen, eine am Dachfrontrahmen festlegbare Dachbefestigungsleiste zur Befestigung einer Dachhaut, einen schwenkbaren Dachspannbügel sowie Schnittkanten-Abdeckformteile für die Abdeckung der beim Abtrennen des Daches entstehenden Schnittkanten.

Aus der gattungsbildenden US-A-4,261,615 ist es bekannt, an der B-Säule einen den beim Abschneiden der Dachhaut entstehenden Freiraum überspannenden Mittelbügel anzuschweißen, um hierdurch einen Überrollbügel zu schaffen. Weiterhin sind zur Erhöhung der Sicherheit gegen Überrollen Seitenverstärkungen in Form von im wesentlichen dreieckförmigen Blechen vorgesehen, die sowohl an der verbleibenden B-Säule als auch an den Seitenscheibenfalzen festschweißbar sind. Diese beiden Maßnahmen sind nur zur Schaffung eines steifen Überrollbügels vorgesehen, können aber insgesamt die durch das Abschneiden des Daches verlorengegangene Steifigkeit des Fahrzeuges bei einem Biegemoment um die Querachse nicht wieder herstellen. Zur Erzielung dieser Steifigkeit sind an der Unterseite der Bodengruppe Längsträger angeschweißt, um ein Abknicken der Bodengruppe um eine Querachse zu vermeiden und so die notwendige Steifigkeit sicherzustellen. Bei dieser bekannten Umrüstung wird an dem verbleibenden Dachfrontrahmen eine Dachbefestigungsleiste angebracht, um ein steifes Verdeck zwischen dem Dachfrontrahmen und dem Mittelbügel einsetzen zu können. Als Dachhaut für den hinteren Bereich zwischen dem Mittelbügel und den an ihren unteren Enden abgeschnittenen C-Säulen sowie dem zwischen diesen C-Säulen liegenden Karosseriebereich ist eine aus Verdeckstoff bestehende Dachhaut vorgesehen, die durch einen schwenkbaren Dachspannbügel im aufgespannten Zustand abgestützt ist.

Aus der DE-A-35 18 519 ist bereits ein Bausatz für die Umrüstung einer Kraftfahrzeug-Limousine in ein Kabriolett bekannt, der einen festen Bodenrahmen, zwei Knotenbleche und ein gelenkig zusammenlegbares Faltplanen-Traggestell umfaßt. Bei diesem Bausatz werden an der Kante der Türschweller in Längsrichtung rechts und links jeweils ein Flacheisen angeschweißt, an denen der Bodenrahmen verschraubt wird. Außerdem wird der Bodenrahmen direkt am Fahrzeugboden verschraubt. Die Enden der Längsträger des Bodenrahmens werden mit dem Achshalter verschweißt. Schließlich werden in die Einstiege vorn, d.h. im A-Säulenbereich und hinten, d.h. im B-Säulenbereich die vorderen und die hinteren Knotenbleche eingeschweißt. Auf diese Weise ist eine Verstärkung der Karosserie geschaffen worden, die ausreichend ist, um auf das Blechdach des Kraftfahrzeuges verzichten zu können.

Nachteilig bei diesen bekannten Umrüstungen ist jedoch die Tatsache, daß verschiedene Schweißarbeiten und damit auch anschließende Lackierarbeiten notwendig sind, so
daß diese Umrüstung nur in Fachbetrieben durch entsprechende Fachleute durchgeführt werden kann, wodurch die Umrüstung verhältnismäßig teuer wird.

Aufgabe der Erfindung ist es, einen Bausatz der eingangs erläuterten Art zu schaffen, der eine Umrüstung ohne Schweiß- und Lackierarbeiten ermöglicht und somit ohne die Hilfe von Fachbetrieben von interessierten Laien durchgeführt werden kann.

Diese Aufgabe wird durch die im Anspruch 1 angegebenen Mittel gelöst.

Aus der US-A-4,171,141 ist bereits ein Mittelbügel mit daran befestigten Seitenbügeln bekannt, deren Enden an der Bodengruppe festschraubbar sind, doch dient dieser so gebildete Rahmen ausschließlich als Überrollbügel für offene Kleinlastwagen, um die Insassen des Kleinlastwagens beim einem Überrollen oder bei herabfallenden Lasten zu schützen. Zur Verstärkung der Karosserie von Kraftfahrzeug-Limousinen nach dem Abschneiden der Dachhaut zur Verstärkung der Bodengruppe sind solche Rahmen nicht eingesetzt worden.

Durch die Verwendung eines Mittelbügels und zweier Seitenbügel, die mit dem Mittelbügel verschraubbar sind und insbesondere durch die Tatsache, daß die Bügelenden mit der Bodengruppe verschraubt werden, sind keine Schweißarbeiten für die Festigkeitserhöhung notwendig, um das Blechdach für die Umwandlung in ein Kabriolett ausschneiden zu können. Lackierarbeiten, die durch das Anschweißen eines Mittelbügels und seitlichen Verstärkungsblechen notwendig sind, können hierdurch entfallen.

Die Erfindung wird nachstehend anhand eines Ausführungsbeispieles näher erläutert. In den Zeichnungen zeigen:
Fig. 1 : eine schaubildliche Darstellung sämtlicher miteinander verbundener Versteifungsbügel;
Fig. 2 : eine Seitenansicht der Versteifungsbügel, teilweise geschnitten;
Fig. 3 : eine Seitenansicht eines auf einer Gleitschiene angeordneten Gleitschuh für einen Dachspannbügel;
Fig. 4 : eine Vorderansicht der Anordnung gemäß Fig. 3 in Richtung des Pfeiles IV;
Fig. 5 : eine Draufsicht auf die Anordnung gemäß Fig. 3;
Fig. 6 : einen Schnitt nach der Linie VI - VI in Fig. in vergrößertem Maßstab.

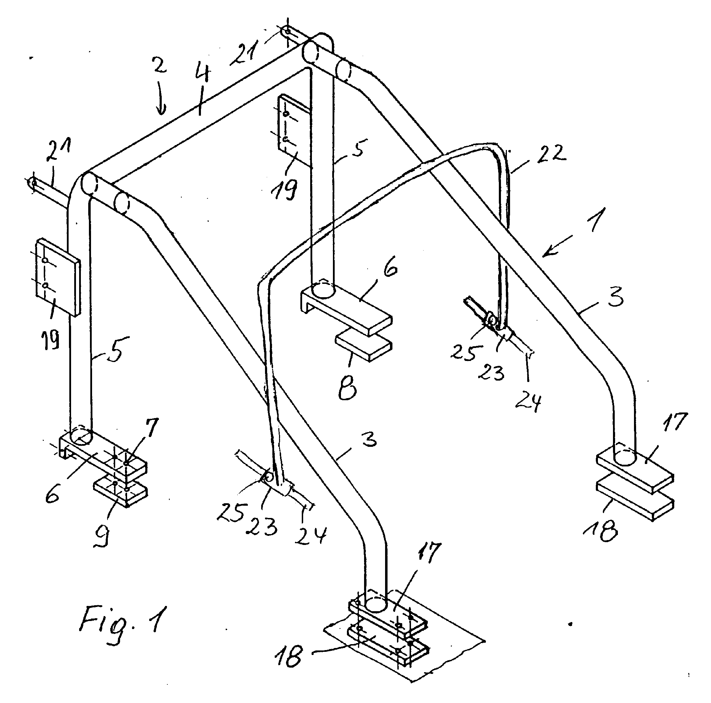

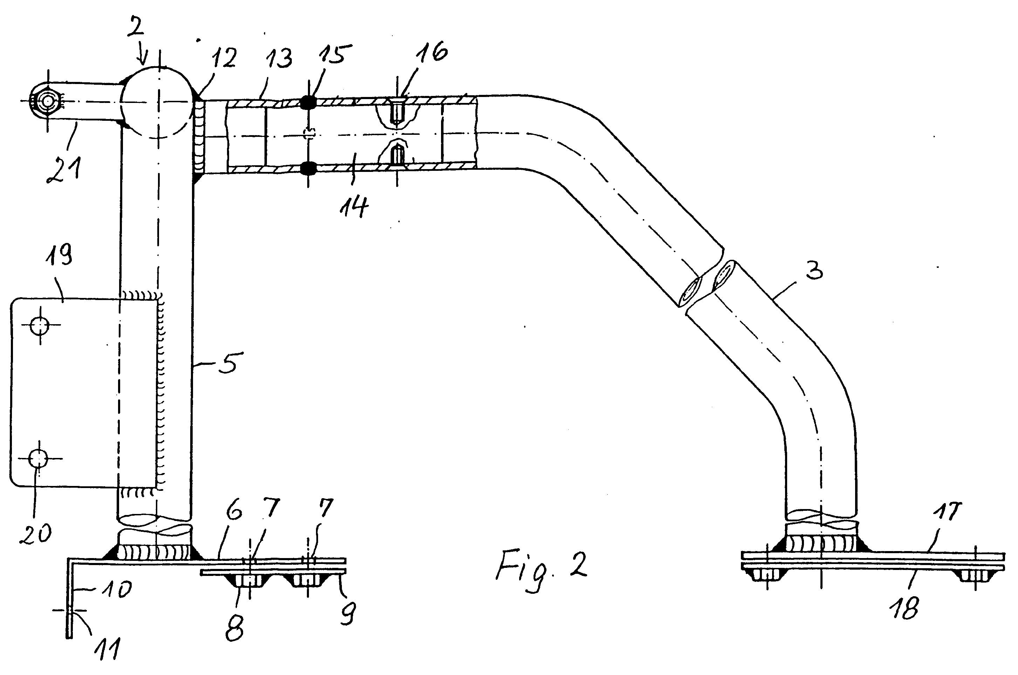

Gemäß den Fig. 1 und 2 besteht der wesentliche Teil des Bausatzes zur Umrüstung einer Kraftfahrzeug-Limousine in ein Kabriolett aus einen insgesamt mit 1 bezeichneten Käfig, der einen U-förmigen Mittelbügel und zwei Seitenbügel 3 umfaßt. Der Mittelbügel weist einen Querholm 4 und zwei senkrechte Schenkel 5 auf. Die senkrechten Schenkel sind an ihren freien Enden mit Befestigungsplatten 6 verschweißt und weisen Durchgangslöcher 7 für Befestigungsschrauben auf, die in Muttern 8 einer Gegenplatte 9 einschraubbar sind. Die Befestigungsplatte 6 wird auf die Bodengruppe aufgesetzt und die Gegenplatte 9 wird auf der Unterseite der Bodengruppe des Kraftfahrzeuges dagegengeschraubt, um eine feste Verankerung zu erzielen. Entsprechend einem Absatz in der Bodengruppe weist die Befestigungsplatte 6 an ihrem in Kraftfahrzeuglängsrichtung vorderen Ende einen nach unten gerichteten Schenkel 10 auf, der mit einer Bohrung 11 für eine Befestigungsschraube versehen ist.

Die Seitenbügel 3 sind mit dem Mittelbügel 2 in der Nähe der äußeren Enden des Querholmes 4 fest verbunden. Hierzu sind am mittleren Holm 4 mittels Schweißnähten 12 Befestigungsstutzen 13 festgelegt, die den gleichen Innen- und Außendurchmesser wie die Seitenbügel aufweisen. In diesen Befestigungsstutzen sind Verbindungsstücke 14 durch mehrere auf den Umfang verteilte Schweißpunkte 15 festgelegt. Verbindungsstücke 14 stehen über die Befestigungsstücke hinaus und dienen zur Aufnahme der oberen Enden der Seitenbügel 3, die exakt auf diese Verbindungsstücke passen und mittels Schrauben 16 festlegbar sind. Hierdurch ist eine stabile lösbare Verbindung zwischen dem Mittelbügel 2 und den Seitenbügeln 3 geschaffen, die zur Erleichterung der Montage lösbar ist. An den unteren Enden sind die Seitenbügel 3 mit Befestigungsplatten 17 verschweißt, die auf die Bodengruppe des Kraftfahrzeuges aufsetzbar und mittels von unten an die Bodengruppe anlegbarer Gegenplatten 8 verschraubbar sind.

Dieser aus Mittelbügel 2 und den Seitenbügeln 3 bestehende Versteifungskäfig ist außer an der Bodengruppe auch noch an der B-Säule und am Dachrahmen festlegbar. Hierzu sind an den senkrechten Schenkeln 5 des Mittelbügels 2 Befestigungslaschen 19 angeschweißt, welche Bohrungen 20 für Befestigungsschrauben zur Befestigung des Mittelbügels an der B-Säule aufweisen. Diese Laschen dienen auch zur Befestigung von Rückhaltegurten. An den oberen Enden der senkrechten Schenkel 5 sind auch noch weiterere Befestigungslaschen 21 mit jeweils einer angeschweißten Mutter 22 zur Befestigung am Dachrahmen des Kraftfahrzeuges vorgesehen.

In Fig. 1 ist auch noch ein Dachspannbügel 22 gezeigt, der U-förmig ausgebildet und mit seinen freien Enden mit Gleitschuhen 23 schwenkbar verbunden ist, die zur Abstützung und zum Spannen der aus Verdeckstoff bestehenden Dachhaut auf Gleitschienen 24 verschiebbar und festlegbar sind. Die Gleitschienen 24 sind auf dem nach dem Abschneiden des Blechdaches verbleibenden restlichen Seitenscheibenfalz befestigt.

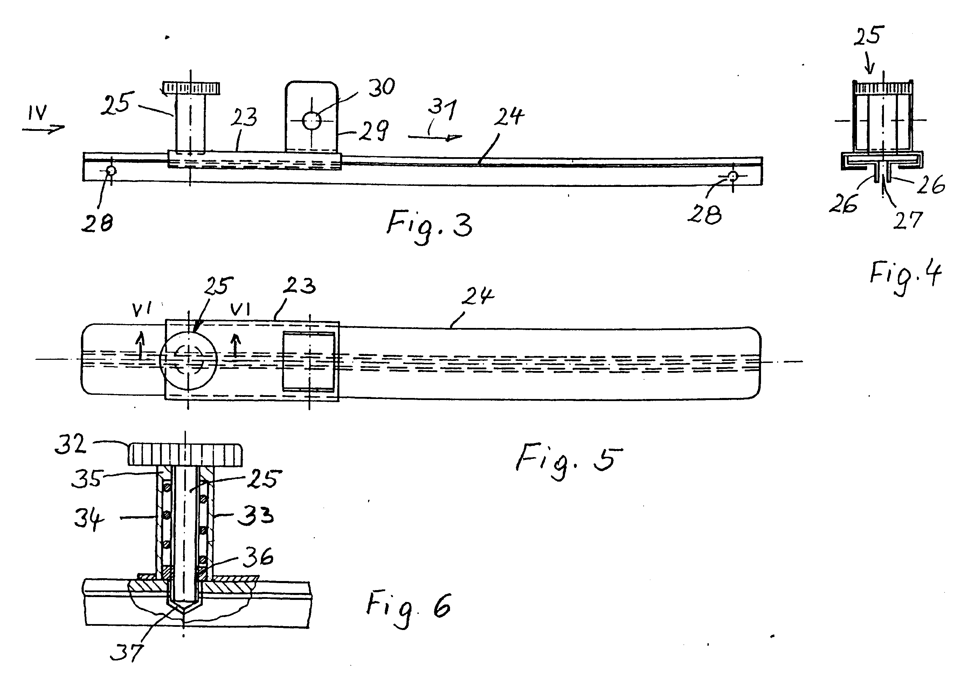

In den Fig. 3 bis 6 ist die Gleitschiene mit Gleitschuh und einem dazugehörenden Verriegelungsbolzen im einzelnen dargestellt.

Wie aus den genannten Fig. ersichtlich, weist die insgesamt mit 24 bezeichnete Gleitschiene an ihrer Unterseite zwei Befestigungswinkel 26 auf, zwischen denen ein gewisser Abstand 27 vorhanden ist. In diesen Freiraum greift der restliche Seitenscheibenfalz ein, an dem die Gleitschiene 24 mittels Schrauben befestigbar ist, die durch Bohrungen 28 in den Winkeln 26 hindurchsteckbar sind. Der Gleitschuh 23 ist im wesentlichen C-förmig ausgebildet und umfaßt nahezu vollständig die Gleitschiene 24, so daß er zwar verschiebbar, jedoch nicht abhebbar auf dieser geführt ist. Auf der Oberseite des Gleitschuhs 23 ist eine U-förmige Haltespange 29 mit ihrem Basisteil festgelegt und dient zur schwenkbaren Lagerung des Dachspannbügels 22, der zwischen die Schenkel der Haltespange 29 einsetzbar und mittels einer durch in den Schenkeln dieser Haltespange vorgesehene und miteinander fluchtende Bohrung 30 steckbaren Schraube schwenkbar gehalten ist. Zum Spannen des Verdeckes wird der Dachspannbügel zunächst in eine schräg nach hinten gerichtete Lage gebracht, worauf durch Verschieben des Gleitschuhs in Richtung des Pfeiles 31 der Dachspannbügel weiter aufgerichtet und in seiner Endstellung, in welcher das Verdeck in einer bestimmten Höhenlage gehalten und gespannt ist, mittels des auf dem Gleitschuh abgeordneten Verriegelungsbolzen 25 festlegbar ist.

Wie aus Fig. 6 ersichtlich, ist der Verriegelungsbolzen 25, der einen Betätigungsknopf 32 aufweist in einer Hülse 33 geführt, in der eine Feder 34 vorgesehen ist, welche sich einerseits an einem oberen Bund 35 der am Gleitschuh 23 befestigten Hülse und andererseits an einem am Verriegelungsbolzen 35 befestigten Bund 36 abstützt. Hierdurch wird der Verriegelungsbolzen 25 durch die Wirkung der Feder 34 in eine Bohrung 37 der Gleitschiene 24 gedrückt, wobei mehrere Bohrungen hintereinander mit engem Abstand angeordnet sein können, um den Gleitschuh 23 in der richtigen Position festlegen zu können.

In den Zeichnungen sind nur die wesentlichen Teile des Umbausatzes dargestellt und beschrieben. Der Umbau einer Kraftfahrzeug-Limousine in ein Kabriolett erfolgt im wesentlichen dadurch, daß nach dem Abschneiden des Blechdaches die verbleibenden Schnittkanten mittels entsprechend geformter Kunststoffteile, die auf diese Blechkanten aufschiebbar sind, abgedeckt werden. Da die Versteifungsbügel und auch die Gleitschiene für den Dachspannbügel mit der Karosserie des Kraftfahrzeuges verschraubt werden, sind keine Schweißarbeiten notwendig. Durch das Abdecken der Schnittkanten mittels entsprechender Formteile sind auch keine Lackierarbeiten erforderlich. Das Verdeck wird im geschlossenen Zustand an einer in der Zeichnung nicht dargestellten Dachbefestigungsleiste festgelegt, die am Dachfrontrahmen befestigt ist. Für den Umbau sind also nur wenige Teile erforderlich, die als Bausatz vorbereitet nach dem Abschneiden des Blechdaches mit der Kraftfahrzeugkarosserie verbunden werden, so daß wegen Fehlens von Schweiß- und Lackierarbeiten dieser Umbau auch von interessierten Laien in verhältnismäßig kurzer Zeit durchgeführt werden kann.

## Patentansprüche

1. Bausatz für die Umrüstung einer Kraftfahrzeug-Limousine in ein Kabriolett, umfassend einen an der B-Säule anzubringenden Mittelbügel (2), Seitenverstärkungen, eine am Dachfrontrahmen festlegbare Dachbefestigungsleiste zur Befestigung einer Dachhaut, einen schwenkbaren Dachspannbügel (22) sowie Schnittkanten-Abdekformteile für die Abdeckung der beim Abtrennen des Daches entstehenden Schnittkanten, **dadurch gekennzeichnet**, daß die Seitenverstärkungen als Seitenbügel (3) ausgeführt und mit dem Mittelbügel (2) verbindbar sind, daß sämtliche Bügelenden an der Bodengruppe festschraubbar sind, daß die gesamte Dachhaut aus Verdeckstoff besteht, und daß der Dachspannbügel (22) mit einem Gleitschuh (23) verbunden ist, der auf einer Gleitschiene (24) verschiebbar und festlegbar ist, welche auf dem restlichen Seitenscheibenfalz festschraubbar ist.

2. Bausatz nach Anspruch 1, dadurch gekennzeichnet, daß an der Enden des Mittelbügels (2) und an den unteren Enden der Seitenbügel (3) Befestigungsplatten (6, 17) angeschweißt sind, die Löcher für Befestigungsschrauben aufweisen.

3. Bausatz nach Anspruch 1 oder 2, dadurch gekennzeichnet, daß der Mittelbügel (2) U-förmig als Überrollbügel gestaltet ist und an seinen senkrechten Schenkeln (5) Laschen (19) für die Verschraubung mit der B-Säule an den Befestigungspunkten für die Rückhaltegurte aufweist, die an den Laschen festlegbar sind.

4. Bausatz nach einem der Ansprüche 1 bis 3, **dadurch gekennzeichnet,** daß am Mittelbügel (2) Befestigungslaschen (21) zur Befestigung desselben am Dachrahmen vorgesehen sind.

5. Bausatz nach einem der Ansprüche 1 bis 4, **dadurch gekennzeichnet,** daß am Mittelbügel Befestigungsstutzen (13) für die Befestigung der Seitenbügel (3) vorgesehen sind.

6. Bausatz nach einem der Ansprüche 2 bis 5, **dadurch gekennzeichnet,** daß den Befestigungsplatten (6, 17) an den jeweiligen Bügelenden von unten an die jeweilige Bodengruppe anlegbare Gegenplatten (9, 18) vorgesehen sind, die mit Gewindelöcher für die Befestigungsschrauben versehen sind.

## Claims

1. Kit for transforming a saloon motor car into a cabriolet, comprising a central bow (2) to be mounted on the B-pillar, side reinforcements, a roof fixing strip which can be secured to the front frame of the roof for fixing a roof panel, a swivelling roof clamping bow (22) and shaped cut edge covering parts for covering the cut edges produced when removing the roof, characterised in that the side reinforcements are designed as side bows (3) and can be connected to the central bow (2), that all of the bow ends can be screwed down on to the underbody, that the entire roof panel consists of hood fabric and that the roof clamping bow (22) is connected to a sliding shoe (23) which can be displaceably secured to a slide rail (24) which can be screwed down on to the remainder of the side window groove.

2. Kit according to claim 1, characterised in that fixing plates (6, 17) having holes for fixing screws are welded on to the ends of the central bow (2) and to the lower ends of the side bows (3).

3. Kit according to claim 1 or claim 2, characterised in that the central bow (2) is designed as a U-shaped roll-over bar and is provided at its vertical arms (5) with shackles (19) for screwing to the B-pillar at the fixing points for the retaining flanges which can be secured to the shackles.

4. Kit according to one of claims 1 to 3, characterised in that the central bow (2) is provided with fixing shackles (21) for fixing it to the roof frame.

5. Kit according to one of claims 1 to 4, characterised in that the central bow is provided with fixing stubs (13) for fixing the side bows (3).

6. Kit according to one of claims 2 to 5, characterised in that counter plates (9, 18) which can be fitted to the respective underbody from below are associated with the fixing plates (6, 17) at the respective bow ends, the said counter plates being provided with threaded holes for the fixing screws.

## Revendications

1. Ensemble de pièces destiné à transformer un véhicule de type berline en un cabriolet, comportant un arceau central (2) à fixer sur une colonne B, des renforts latéraux, une baguette de fixation de toit pouvant être fixée sur le cadre frontal de toit et destinée à maintenir la couverture de toit, un arceau pivotant de tension de toit (22), ainsi que des éléments préformés destinés à recouvrir les arêtes de coupe engendrées lors de la séparation du toit,
caractérisé en ce que les renforts latéraux sont réalisés sous forme d'arceaux latéraux (3) et sont reliés à l'arceau central (2), en ce que toutes les extrémités d'arceaux peuvent être boulonnées au dessous de caisse, en ce que l'ensemble de la couverture de toit est constitué d'une capote, et en ce que l'arceau de tension de toit (22) est relié à un patin coulissant (21), lequel peut coulisser et être fixé dans une position donnée dans une glissière (24), cette dernière pouvant être vissée sur la feuillure latérale restante du vitrage.

2. Ensemble de pièces selon la revendication 1, caractérisé en ce que des plaques de fixation (6, 17), comportant des trous pour des vis de fixation, sont soudées sur les extrémités de l'arceau central (2) et sur les extrémités inférieures des arceaux latéraux (3).

3. Ensemble de pièces selon l'une quelconque des revendications 1 ou 2, caractérisé en ce que l'arceau central (2) est conçu en tant qu'arceau de sécurité en forme de U, dont les branches verticales (5) comportent des éclisses (19) destinées à visser la colonne B aux points de fixation des ceintures de sécurité, ces dernières pouvant être fixées aux éclisses.

4. Ensemble de pièces selon l'une quelconque des revendications 1 à 3, caractérisé en ce que des éclisses de fixation (21) sont prévues sur l'arceau central (2), lesquelles sont destinées à fixer ce dernier au cadre de toit.

5. Ensemble de pièces selon l'une quelconque des revendications 1 à 4, caractérisé en ce que des tubulures de maintien (13) sont prévues sur l'arceau central pour la fixation des arceaux latéraux (3).

6. Ensemble de pièces selon l'une quelconque des revendications 2 à 5, caractérisé en ce qu'il est prévu des contre-plaques (9, 18) sur les plaques de fixation (6, 17) des extrémités inférieures respectives des arceaux, pouvant être fixées au dessous de caisse et pourvues de trous taraudés destinés aux vis de fixation.
